# EUROPEAN PATENT APPLICATION

(11) **EP 2 813 948 A1**
(43) Date of publication of application: **17.12.2014**
(21) Application number: 13250067.9
(22) Date of filing: 15.06.2013
(51) Int. Cl.: G06F 9/54, G06F 11/07

(54) **Instructing an operation to be performed at a central station from a remote station**

(71) Applicant: Fortnox AB, 351 06 Växjö (SE)
(72) Inventor: Bonnevier, Alexander, 352 33 Växjö (SE)
(74) Representative: Atkinson, Ralph

(57) **Abstract**

A remote device **(102)** is configured to convey instructions to a central station **(101).** An input device **201** receives input commands and a processing device **(301)** is configured to asynchronously convey the input commands to the central station. A cache **202** sequentially caches the input commands. Replaying means, implemented by processor **301,** replays one or more of the cached commands to repeat an input driven sequence to identify the cause of an unexpected event.

## Description

### CROSS REFERENCE TO RELATED APPLICATIONS

This application represents the first application for a patent directed towards the invention and the subject matter.

### BACKGROUND OF THE INVENTION

### 1. Field of the Invention

The present invention relates to a method of instructing an operation to be performed at a central station from a remote station, of the type comprising the steps of: receiving input command at said remote station to effect an operation at said central station; asynchronously conveying said input command to said central station; and detecting an unexpected event.

The present invention also relates to a remote device configured to convey instructions to a central station, of the type comprising; an input device for receiving an input command; and a processing device configured to asynchronously convey said input commands to a central station.

The present invention also relates to a central station configured to receive input commands from a remote station, comprising; receiving-means configured to receive and process asynchronously received input commands from said remote station; and action-means configured to act upon said received input commands.

### 2. Description of the Related Art

Procedures are known for generating instructions at a remote station that are then conveyed to a central station and acted upon at said central station. The central station may then be in a position to produce output signals for controlling operations, such as manufacturing processes for example.

Systems of this type are increasingly being deployed using technology generated to support the worldwide web and include, for example, the use of asynchronous JavaScript with XML or JSON. Collectively, this technology may be referred to as AJAX.

Prior to the use of this known asynchronous technology, similar platforms were implemented using synchronous technology. When using synchronous technology, a command may be generated at a remote station and conveyed to a central station. At the central station a question may be asked as to whether it is possible to act upon the command or a plurality of commands and the remote station would be frozen out from further operation until a response had been received. Consequently, if a problem exists, this is quickly brought to the attention of the operator and appropriate action can be taken.

In an asynchronous environment, an unexpected event may occur in response to input commands. However these commands may have been generated sometime ago and it may have taken some time to actually convey the commands to the central station; given the asynchronous nature of the communication. Thus, further commands will have been received so a greater problem exists in terms of identifying the relationship between cause and effect.

When using program controlled systems, it is possible for debugging operations to be completed successfully in relation to procedures conducted at the remote station and for procedures conducted at the central station. However, even when thorough testing has been performed on each system individually, unexpected events may still arise when the systems are working together. An emergent problem may manifest itself which was not anticipated when considering each of the component systems individually. Consequently and particularly within asynchronous systems, it may become difficult to identify the cause of the unexpected event which would in turn introduce substantial delays before a solution could be provided. Furthermore, in some applications when controlling external machinery for example, these emergent errors could introduce very serious problems, while being produced by individual components that have satisfied rigorous testing activities.

### BRIEF SUMMARY OF THE INVENTION

According to a first aspect of the present invention, there is provided a method of instructing an operation to be performed at a central station from a remote station of the aforesaid type, **characterized in that** said input command is stored in a cache at said remote station; and said command is replayed from said cache to represent an input to identify the cause of an unexpected event.

In an embodiment, a plurality of input commands are received at said remote station; said input commands are asynchronously conveyed to said central station; said input commands are stored in said cache sequentially at said remote station; and a plurality of said commands are replayed from said cache.

According to a second aspect of the present invention, there is provided a remote device, configured to convey instructions to a central station of the aforesaid type, characterized by a cache for sequentially storing said input commands; and replay-means for replaying one or more of said commands from said cache to repeat an input driven sequence.

In an embodiment, the remote device includes non-volatile memory and a portion of said non-volatile memory is configured to establish said cache.

According to a third aspect of the present invention, there is provided a central station, configured to receive instructions from a remote station, of the aforesaid type, characterized by rollback means configured to instruct said remote station to rollback previously received instructions; whereupon a replay means at said remote station reads said previously received input commands from a cache and replays one or more of said input commands.

### BRIEF DESCRIPTION OF THE DRAWINGS

Figure 1 shows an environment for instructing an operation;
Figure 2 shows a protocol diagram of transmissions performed within the environment of Figure 1;
Figure 3 shows an example of a remote station;
Figure 4 shows operations performed by a processor at the remote station;
Figure 5 details further operations performed at the remote station;
Figure 6 shows an example of a central station;
Figure 7 identifies instructions performed at the central station; and
Figure 8 details further procedures performed at the central station.

### DETAILED DESCRIPTION OF EXAMPLE EMBODIMENTS

### Figure 1

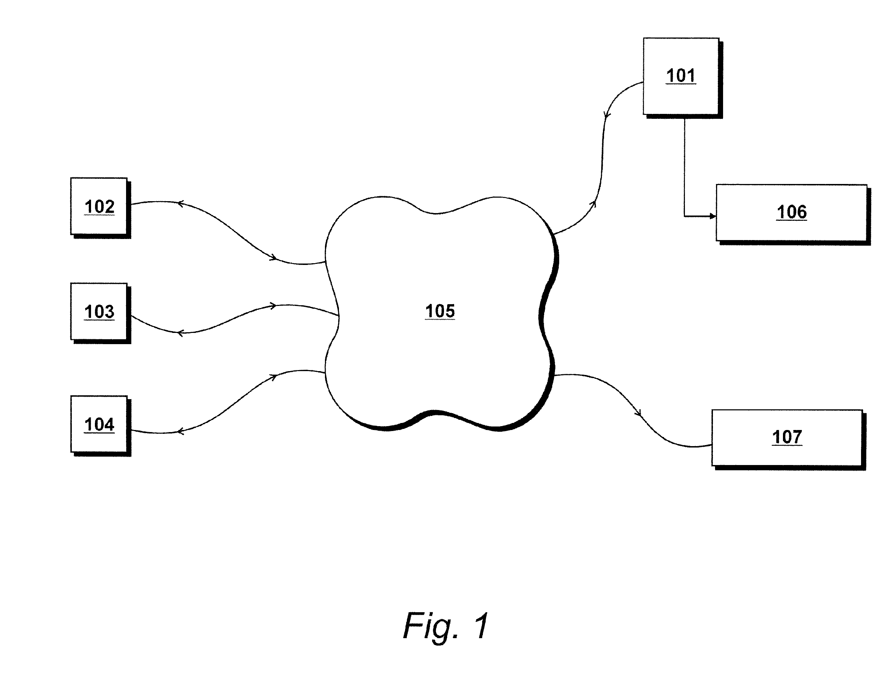

An environment for instructing an operation to be performed at a central station **101** from a remote station **102** is illustrated in Figure 1. For the purposes of this example, a second remote station **103** is shown, along with a third remote station **104.** Each of these remote stations **102** to **104** communicates with the central station **101,** and the central station may maintain individual sessions for each of these remote stations.

In this example, communication takes place via a network **105,** the exact nature of which is not particularly relevant to the current embodiment. However, in an embodiment, it may include wireless communications, including cellular communications, and may deploy internet protocols.

Following processing operations performed at the central station **101,** in response to commands received from the remote stations, such as remote station **101,** output commands are generated to external devices. In an embodiment, a first external device **106** is shown communicating directly with the central station **101.** In addition, a further external device **107** is shown communicating via network **105.**

Thus, input commands are received at a remote station, such as remote station **102,** to effect an operation at the central station **101.** Input commands at the remote station **102** are asynchronously conveyed to the central station **101.** At the remote station **102,** input commands are cached sequentially. Having cached these input commands, it is possible for one or more of these commands to be replayed from the cache to repeat an input driven sequence to identify the cause of an unexpected event.

In an embodiment, an unexpected event may have limited consequences and may merely represent a situation in which the outcome is in some way different from that which was expected. Thus, even under these circumstances, where the alternative outcome may be totally acceptable, it may be advantageous, to ascertain the reason as to why this unexpected event occurred.

In alternative embodiments, when an unexpected event may result in undesirable commands being sent to the external devices **106, 107,** the presence of an unexpected event may be much more important, possibly damaging and possibly even catastrophic. Thus, if such an unexpected event is identified, it is useful to identity the reason for the event and rapidly make steps towards correcting it. In alternative embodiments, an unexpected event may result in failure of operations performed by the central station **101;** effectively a systems crash. Under these circumstances, it may be very difficult to recover the status of information held at the central station **101** and therefore there may be little evidence remaining to identify the cause of the unexpected event. However, given that instructions will have been cached at the remote station **102,** it is possible to re-establish the status of the central station **101** to a previous instance and then repeat selections of the commands that were issued until the particular command or commands causing the failure can be isolated.

### Figure 2

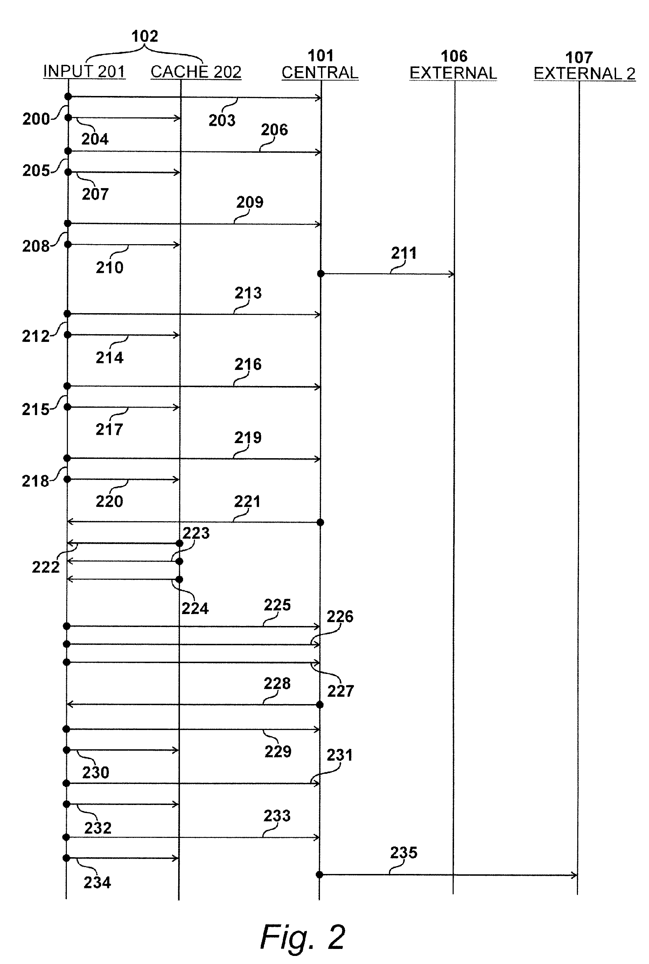

A protocol diagram showing an example of transmissions preformed within the environment of Figure 1 is shown in Figure 2. Remote station **102** includes an input device **201** and a cache **202.** An input signal generated at **200** is supplied to the central station **101.** In addition, this input signal is also supplied, at **204,** to the cache **202.** Thus, in addition to the input instruction being supplied, via network **105,** to the central station **101,** a copy of this instruction is also retained in cache **202.**

In this example, a further input signal is generated at **205** and this is again supplied to the central station **101** at **206** and written to cache at **207.**

A third input signal **208** is again supplied at **209** to the central station **101** and at **210** it is written to cache **202.** For the purposes of this example, the central station **101** has now received a sufficient number of commands for it to generate an output signal at **211** which, for the purposes of this example, is supplied directly to external device **106.**

A similar sequence of events then follows, initiated by input **212.** At **213** an input command is supplied to central station **101** and at **214** the command is written to cache **202.** A further input command **215** follows which again is supplied to central station **101** at **216** and written to cache at **217.** A third input **218** follows, conveyed to central station **101** at **219** and written to cache at **220.** For the purposes of this example, an operator at remote station **102** would then expect a further output signal to be generated by the central station **101,** possibly intended for external device **107.** However, for the purposes of this example, it is assumed that an unexpected event has occurred at the central station **101,** possibly due to a programming error, a user error, a transient error or a data error for example. Thus, central station **101** is not in a position to issue an output command but instead returns an error message at **221** to remote station **102.**

At remote station **102** it may be assumed that the recently transmitted commands **(203, 216** and **219)** have caused the problem. The nature of the problem may be unknown therefore in order to indentify the cause, it is possible for the session to be repeated. Thus, the commands written to cache **202** at **214, 217** and **220,** are read from cache at **222, 223** and **224.** The session, made up of communications **213, 216** and **219,** is then repeated by issuing the commands again at **225, 226** and **227.** For the purposes of this example, it is assumed that an error occurs again and this is relayed back to the remote station **102** at **228.**

For the purposes of this example, it is assumed that the nature of the error has now been analysed and corrections have been made. It is therefore possible to repeat the session with these corrections in place. Thus, a modified command is issued at **229** and again this is written to cache at **230.** The second modified command is issued at **231** and written to cache at **232.** Finally, a third command is issued at **233** and written to cache at **234.** For the purposes of this example, is it assumed that an unexpected event does not occur and that procedures follow as intended; resulting in the central station **101** issuing a command to external device **107,** as shown at **235,** via network **105.**

In an embodiment, the central station **101** may include a database and operations performed at the central station **101,** in response to input commands, may involve updating this database. Furthermore, as previously described, the central station may also communicate with external devices and an operation, derived from instructions from a remote station, may involve supplying control signals to the external devices. These control signals may be generated directly or, alternatively, may be a result of modifications made to the database. Thus, in an embodiment, a plurality of events could modify entries in a database, which then results in output signals being supplied to the external devices.

In an embodiment, the remote station is a portable station communicating via a radio channel. The radio channel may operate within a wireless environment or a cellular environment.

In an embodiment, the input commands are generated by manual interaction with the graphical user interface. The graphical user interface may be presented on a touch sensitive screen. The remote station may include non-volatile memory and the cache may be established within a region of this non-volatile memory.

### Figure 3

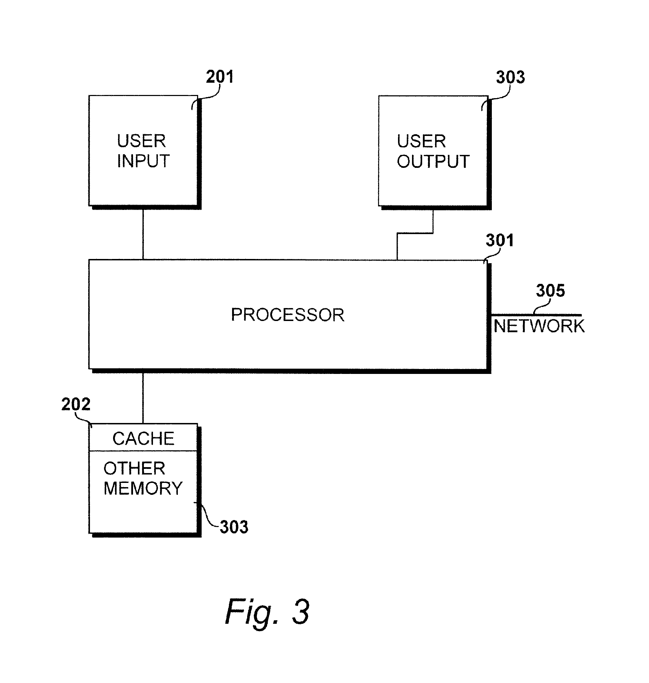

An example of a remote station **102** is detailed in Figure 3. The remote station includes a processor **301** configured to receive input commands from the user input device **201** and to display an output interface to a user via an output display **303.** The processor **301** sends data to and receives data from a memory device **303.** Within the memory device **303** there is the local cache **202.**

As previously described, the local cache **202** enables the remote device **102** to retain a record or history of the input commands that have been received locally, prior to or after being conveyed to the central station. In an embodiment, the input commands may be acted upon locally, prior to being conveyed, as described in the applicants co-pending European patent application (4148-P101-EP).

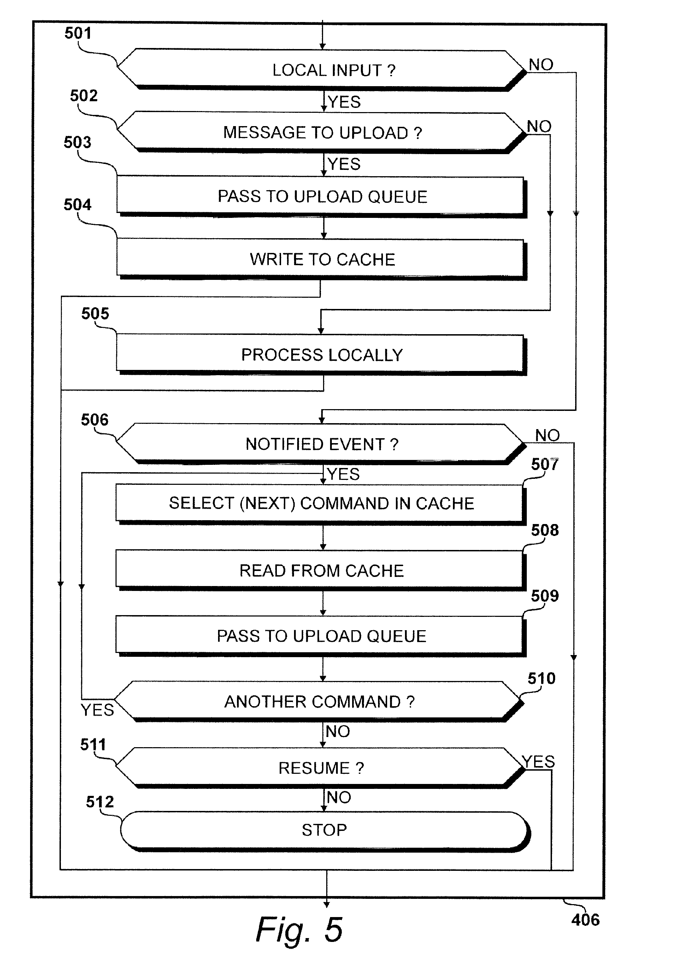

Thus, the remote device is configured to convey instructions to the central station by providing an input device **201** for receiving input commands and a processing device **301** configured to asynchronously convey the input commands to a central station **101.** A cache **202** is provided for sequentially caching the input commands. Furthermore, a replay means is provided within processor **301** for replaying one or more of said input commands from the cache **202** to repeat an input driven sequence to identify the cause of the unexpected event, as detailed in Figure 5.

The remote device may include a radio communication device for facilitating portability, along with a display device for displaying a graphical user interface. The display device may itself be touch sensitive, such that the displayed graphical interface is also responsive to received input data. In an embodiment, the remote device includes non-volatile memory, with portion **202** of the non-volatile memory being configured to establish the cache; with remaining memory **303** being available for performing other operations.

### Figure 4

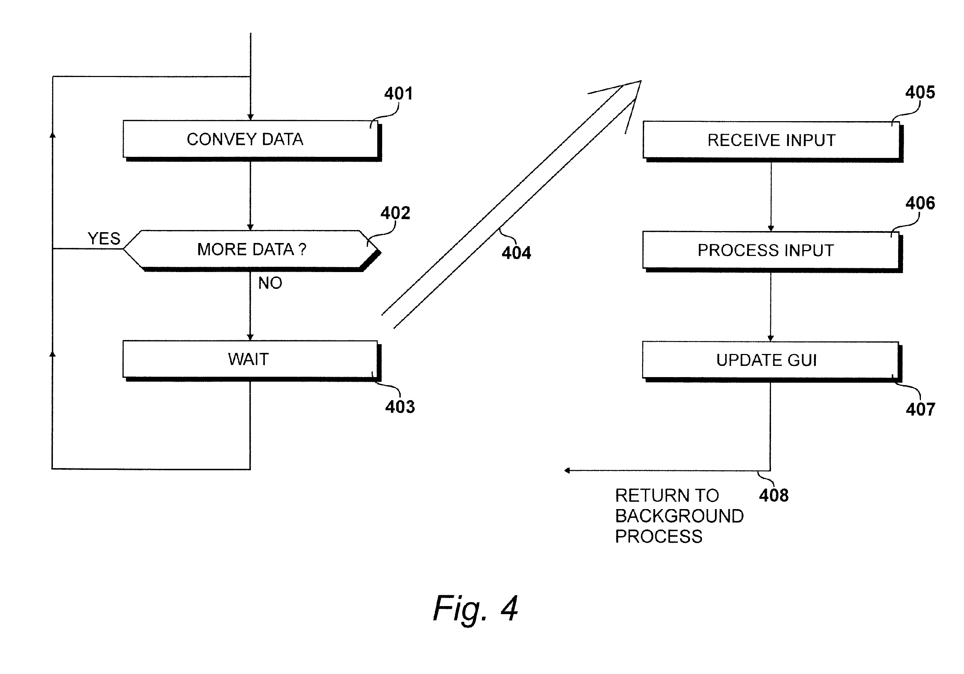

Operations performed by processor **301** are illustrated in Figure 4. Foreground processes are shown to the right and the background asynchronous processes are shown to the left. When not required to perform operations in response to local input, the processor **401** attempts to convey data, as shown at step **401,** to the control station via its local network connection **305** and then on to the wider network **105.** This communication channel may include wireless connections, including cellular connections.

After conveying data at step **401,** a question is asked at step **402** as to whether more data is available and when answered in the affirmative, this further data is again conveyed at step **401.**

If the question asked at step **402** is answered in the negative, the procedure may enter a wait state at step **403** and then again loop around to step **401** to continue conveying any additionally received data to the central station **101.**

At any time during the operations being performed from step **401** through step **403,** the processor **301** may receive an interrupt, as illustrated by arrow **404.** The processor **301** immediately enters a routine to service the interrupt, possibly involving the stacking of data currently held in memory; whereupon it is then in a position to receive input data at step **405.** At step **406** the input data is processed and at step **407** the graphical user interface displayed to the user, via user interface **301,** is updated.

After the completion of the interrupt being serviced, the processor returns to attending to the background processes as illustrated by arrow **408.**

### Figure 5

Processes **406,** indentified in Figure 4, are detailed in Figure 5. An input command was received at step **405,** therefore a question is asked at step **501** as to whether this is a local input. For the purposes of illustration, a local input will represent a user command whereas a non-local input will have been received from the central station **101.** Thus, input **203** represents a local input whereas input **221** represents an external input. Processes **502** through **505** attend to the servicing of a local input and processes **506** through **511** attend to the processing of an external input.

In response to the question asked at step **501** being answered in the affirmative, representing an internal input, a question is asked as to whether a message has been received that is to be uploaded to the central station **101.** Thus, a distinction is made between an input command that may relate exclusively to local activities, as distinct from an input command that requires uploading to the central station **101.** Thus, when the question asked at step **102** is answered in the affirmative, the received command is passed at step **503** to an upload queue. Thus, when supplied to the upload queue, the instruction will be conveyed asynchronously to the central station **101** as part of the background process. Thus, this represents communication **203** and is followed by step **504** resulting in the command being written to cache **202,** represented by communication **204.** Thereafter, the graphical user interface is updated at step **407.**

If the question asked at step **502** is answered in the negative, to the effect that the input message does not need to be conveyed to the central station, local processing occurs at step **505.**

If the question asked at step **501** is answered in the negative, the processor is required to process the external input. A question is asked at step **506** as to whether the external input represents a notification of an unexpected event, as represented by communication **221** and communication **228** in Figure 2. If answered in the negative, the event relates to other matters outside the scope of this disclosure. If the question asked at step **506** is answered in the negative, a failure event etc. has occurred and the re-running of cached instructions is then implemented.

At step **507** a command from cache is selected and at step **508** the cached instruction is read. Thereafter, at step **509** the instruction read from cache is passed to the upload queue for uploading as part of the asynchronous procedure detailed in Figure 4.

At step **510** a question is asked as to whether another command is present within the range of interest and when answered in the affirmative, control is returned to set **507,** thereby allowing the next command in cache to be selected. Thus, this process repeats until the full range of commands have been read from cache and resupplied to the central station **101.**

Thus, in the example shown in Figure 2, the loop would repeat twice resulting in, for example, the re-issuing of communications **225, 226** and **227.** Thereafter, when all of the commands have been retransmitted, the question asked at step **510** is answered in the negative. A question is then asked at step **511** as to whether the process should resume. Thus, when answered in the affirmative, control is directed to step **407** and the graphical user interface is updated as required. Alternatively, if problems still exist, it is possible for the question asked at step **511** to be answered in the negative resulting in the procedure stopping at step **512.**

In an embodiment, a plurality of input commands are received at said remote station and these input commands are asynchronously conveyed to the central station. The input commands are stored in cache sequentially at the remote station and a plurality of these commands are replayed from the cache.

In an embodiment, the input commands are generated by a manual operation performed by a user upon an input device. The central station is configured to operate in a conventional mode prior to detecting an unexpected event. In addition, the control station operates in a diagnostic mode after detecting the unexpected event.

The control station may be configured to receive manual input controls from an operator during the diagnostic mode. In this diagnostic mode, a sequence of input commands may be replayed from cache while the control operator communicates with the remote user. Thus, the control operator could communicate with the remote user via an alternative communications channel, such as by telephone for example. In this way, if an end user has a problem, it is possible for the control operator to perform a walk-through operation with an end user making reference to the sequence of stored events. In this way, it should be possible to identify the cause of the unexpected event, but that be due to an erroneous instruction, an erroneous action or due to a user failing to do what they had intended to do.

In an alternative embodiment, it is possible for the control station to receive manual input controls from a programmer during the diagnostic mode. A sequence of input commands may be replayed from cache under the control of the programmer. The programmer may introduce changes to instructions executed at the central station or at the remote station. A sequence of input commands are then replayed from cache, so as to test the validity of the new instructions. In this way, new instructions may be tested with reference to a recording of real input commands initiated by a real user. Thus, the new instructions may be tested in a diagnostic mode that accurately reflects real input, without the programmer themselves being required to emulate a sequence of real input commands.

In an alternative embodiment, the control station may receive new instructions. Alternatively, or in addition, a remote station may receive new instructions. In this way, during a diagnostic mode, a sequence of input commands are replayed to reproduce the actions of a remote user. An output may be produced identifying the success or failure of these new instructions.

In this way, it is possible for a programmer to replay an entire sequence of input commands automatically, thereby artificially reproducing the actions of a real end user, when testing new program instructions. Tests of this type, during a diagnostic mode, may run automatically with the results, a success or a failure, being reported to the programmer after many runs of this type being completed.

In an alternative embodiment, the control station instructs a plurality of remote stations to replay stored input commands from their respective cache during the diagnostic mode in order to stimulate a load condition. The control station generates an output indicating the ability of the control station to function as intended under this load condition. Thus, in this way, a programmer can execute a large number of recorded cache instructions replayed together to simulate the effect of many users on the system at the same time; generally referred to as "load testing". Such an operation is designed to stress the system under simulated heavy load conditions so that a programmer may determine the extent to which the system is able to cope.

### Figure 6

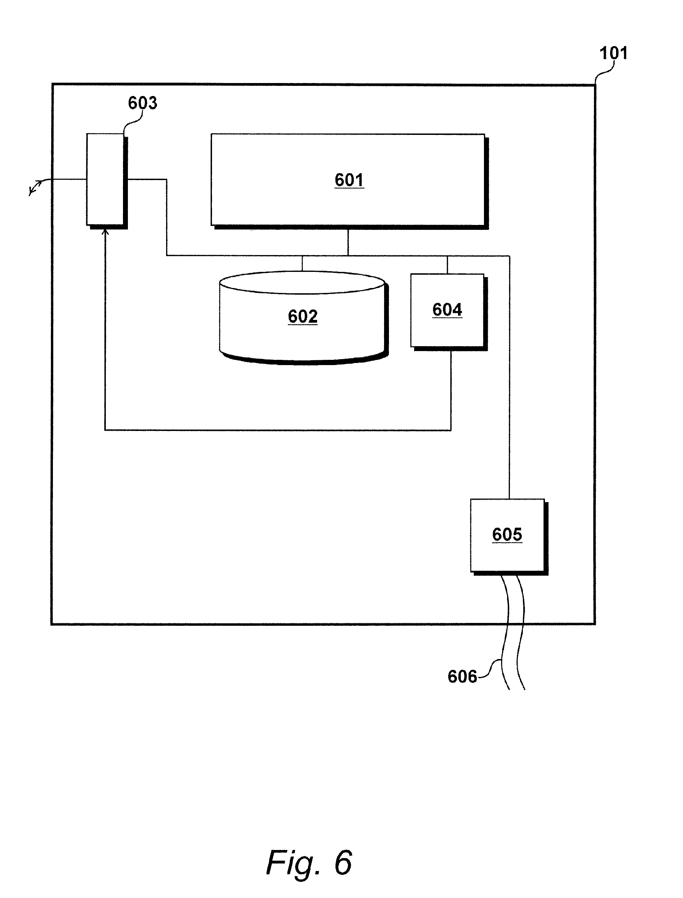

An example of central station **101** is detailed in Figure 6. A processor **601** communicates with permanent storage device **602.** Within said permanent storage device, a database is defined comprising a plurality of database tables. In this embodiment, a single processor **601** is shown but in an alternative embodiment a plurality of processors are provided; the total number of which being determined by the total number of sessions that are required to run concurrently. This in turn will be determined by the number of remote stations **(101** to **104)** communicating with a central station **101.** Although three examples are shown in Figure 1, the total number of remote stations could be in the tens of thousands.

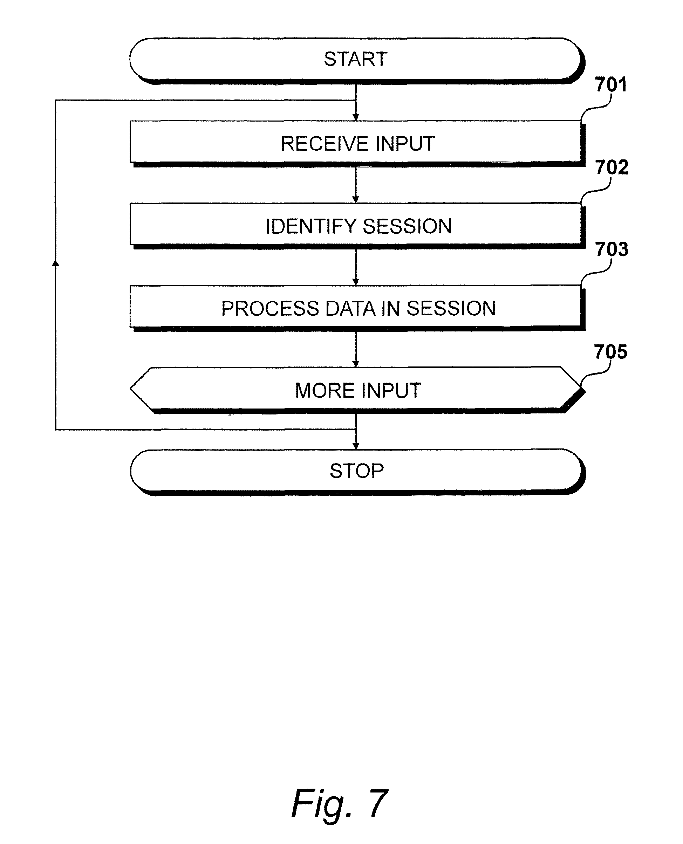

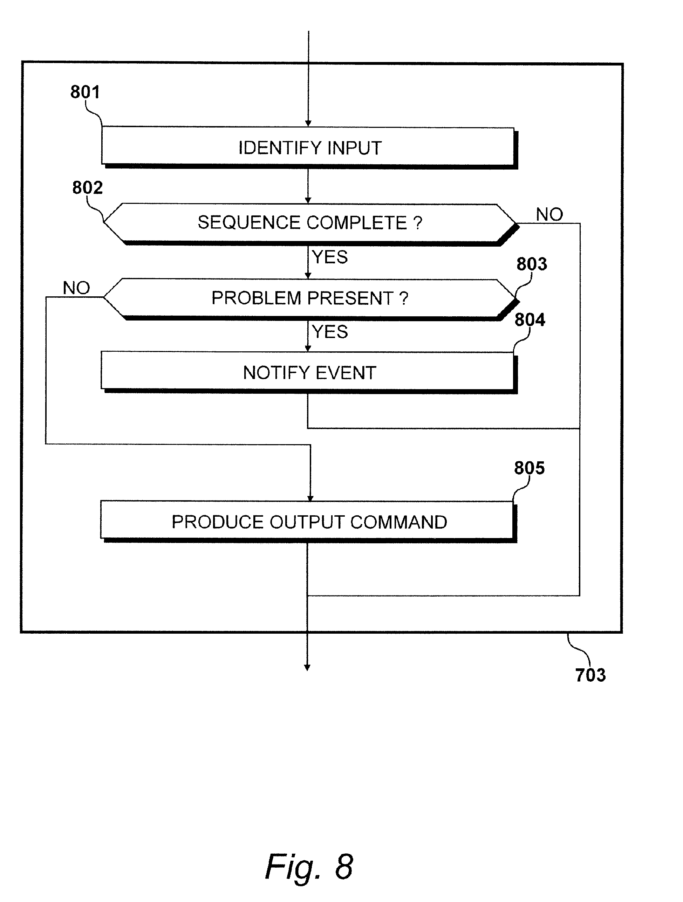

An input device **603** provides a receiving means configured to receive input commands asynchronously, such that these input commands can be processed by the processor **601.** The processor **601** is also configured to act upon these received commands, as detailed in Figures 7 and 8.

In addition to instructions being received from the remote stations, via input device **601,** device **601** also operates as an output device for conveying notifications back to remote stations. The identification of a requirement to issue a notification may be derived within process **601** or additional rollback means **604** may be configured to instruct a remote station to rollback to previously received instructions. As previously described, when a remote station is instructed to rollback previously received instructions, replay means are provided at the remote station, by means of cache **202**, so as to allow the instructions to be read from cache and replayed; so as to identify the cause of an unexpected event.

In an embodiment, action means are configured to perform operations upon the database retained within storage **602.** Furthermore, an interface **605** may be provided configured to control the external devices, via an output transmission channel **606,** either directly or in response to an analysis of data contained within the database.

### Figure 7

An example of instructions preformed by processor **601** are detailed in Figure 7. At step **701** input commands are received and at step **702** the session is identified; the processor **601** being configured in a multi-tasking environment and servicing many sessions for respective remote stations.

At step **703** the data in the session is processed and at step **705** a question is asked as to whether more input is to be considered. When answered in the affirmative, control is returned to step **702** and the process is repeated.

### Figure 8

Procedures **703** for processing data in a session are detailed in Figure 8. At step **801** an input is identified and a question is asked at step **802** as to whether the sequence is complete When answered in the negative, more input is required therefore control is directed to step **705.**

When the question asked at step **802** is answered in the affirmative, to the effect that the sequence is complete, a question is asked at step **803** as the whether a problem is present. When answered in the negative, control is directed towards step **805** and, where appropriate, an output command is generated. Thus, this situation represents that illustrated in Figure 2 in which input commands **203, 206** and **209** have been identified resulting in output command **211.**

When the question asked at step **803** is answered in the affirmative, to the effect that a problem has been identified, the event is notified at step **804.** This results in the notification being conveyed back to the remote station, as illustrated in communication **221** for example.

## Claims

1. A method of instructing an operation to be performed at a central station from a remote station, comprising the steps of:
receiving an input command at said remote station to effect an operation at said central station;
asynchronously conveying said input command to said central station; and
detecting an unexpected event, **characterized in that**:
said input command is stored in a cache at said remote station; and
said input command is replayed from said cache to repeat an input so as to identify the cause of an unexpected event.

2. The method of claim 1, wherein:
a plurality of input commands are received at said remote station;
said input commands are asynchronously conveyed to said central station;
said input commands are stored in said cache sequentially at said remote station; and
a plurality of said commands are replayed from said cache.

3. The method of claim 1 or claim 2, wherein said central station includes a database and said operation involves updating said database.

4. The method of any of claims 1 to 3, wherein said central station communicates with external devices and said operation involves supplying control signals to said external devices.

5. The method of any of claims 1 to 4, wherein said input command(s) is/are generated by manual interaction with a graphical user interface.

6. The method of any of claims 1 to 5, wherein an input command is generated by a manual operation performed by a user upon an input device;
said central station operates in a conventional mode prior to detecting said unexpected event; and
said control station operates in a diagnostic mode after detecting said unexpected event.

7. The method of claim 6, wherein:
said control station receives manual input controls from a control operator during said diagnostic mode; and
a sequence of input commands are replayed from said cache while said control operator communicates with said remote user.

8. The method of claim 6, wherein:
said control station receives manual input controls from a programmer during said diagnostic mode;
a sequence of input commands are replayed from said cache under the control of said programmer;
said programmer introduces changes to instructions executed at said central station or at said remote station; and
said sequence of input commands replayed from said cache are replayed again.

9. The method of claim 6, wherein:
said control station and/or said remote station receive new instructions during said diagnostic mode;
a sequence of input commands are replayed to reproduce the actions of a remote user; and
an output is produced identifying the success or failure of said new instructions.

10. The method of claim 6, wherein:
said control station instructs a plurality of remote stations to replay stored input commands from their respective cache during said diagnostic mode to simulate a load condition; and
said control station generates an output indicating the ability of said control station to function as intended under said load condition.

11. A remote device configured to convey instructions to a central station, comprising:
an input device for receiving input commands; and
a processing device configured to asynchronously convey said input commands to a central station, **characterized by**:
a cache for sequentially storing said input commands; and
replay-means for replaying one or more of said commands from said cache to repeat an input driven sequence.

12. The remote device of claim 11, including non-volatile memory, wherein a portion of said non-volatile memory is configured to establish said cache.

13. A central station configured to receive input commandsfrom a remote station, comprising:
receiving-means configured to receive and process asynchronously received input commands from said remote station; and
action-means configured to act upon said received commands, **characterized by**:
rollback-means configured to instruct said remote station to roll back previously received instructions,
whereupon a replay-means at said remote stations reads said previously received input commands from a cache and replays one or more of said input.

14. The central station of claim 12, including a database, wherein said action-means is configured to perform operations upon said database.

15. The central station of claim 14, wherein output events for controlling external devices are generated in response to analysing data from said database.
